# EUROPEAN PATENT APPLICATION

(11) **EP 2 811 789 A1**
(43) Date of publication of application: **10.12.2014**
(21) Application number: 13360011.4
(22) Date of filing: 03.06.2013
(51) Int. Cl.: H04W 52/02

(54) **A communication method, a communications system, an access network node and a power limited node**

(71) Applicant: ALCATEL LUCENT, 92100 Boulogne-Billancourt (FR)
(72) Inventor: Venkateswaran, Vijay, Dublin 15 (IE); Lin, Chin-Kuang, Dublin 15 (IE)
(74) Representative: Greenwood, Matthew David

(57) **Abstract**

A communication method for a communications network comprising an access network node and a power limited node is disclosed. The method comprises transmitting a wake-up signal from the access network node; receiving the wake-up signal at the power limited node; generating an activation signal based on the received wake-up signal; and changing the operational mode of the power limited node in response to the activation signal from a sleep mode in which the power limited node is not operable to communicate with the access network node to an active mode in which the power limited node is operable to communicate with the access network node.

## Description

### FIELD OF THE INVENTION

The present invention relates to a communication method for a communications network comprising an access network node and a power limited node, a communications system, an access network node and to a power limited node.

### BACKGROUND OF THE INVENTION

Machine to machine (M2M) networks and devices are increasingly growing in number and it is projected that they will greatly outnumber existing cellular networks. However, existing personal area networks (PAN) standards such as IEEE 802.15.4 and Zigbee are not equipped to handle such a large amount of traffic, particularly while increasing range and reducing power. These networks are expected to cover a wide variety of applications ranging from smart energy meters, temperature/traffic monitoring, body area networks and industrial automation to name but a few examples.

One important consideration in machine to machine communications is the battery life of sensor nodes or indeed other power limited nodes in the network. It is desirable that battery lifetimes of sensor nodes for machine to machine communications should be of the order of years as opposed to days, as seen in cellular communications, and less than 1 to 2 months in current personal area networks and machine to machine standards.

In view of this, sensor nodes are required to have a low duty cycle and remain in sleep mode for most of the time. To transfer information to the network, sensor nodes occasionally transition to active transmit and receive modes in order to transmit and receive to and from the network.

One technique for controlling the duty cycle of a sensor node is to synchronize sensor nodes to periodically wake up from a sleep mode to an active mode. In the active mode, the sensor node scans the physical network and enables information transfer to and from the network. This technique is disadvantageous as the sensor node will periodically wake up from the sleep mode to the active mode, regardless of whether it has any information to transmit/receive, and may involve a sensor transitioning to an active state to serve no function.

Another technique for controlling the duty cycle of a sensor node is to control the sensor node to remain in an idle state and transition to an active mode in which the sensor scans the physical network and enables information transfer to and from the network. The idle state is a state in which the transmit/receive functions are not actually being used but are being powered such that can be readily used. Therefore, in the idle mode, the sensor node consumes less power than in the transmit/receive modes, but consumes more power than when in the sleep mode.

A further technique for controlling duty cycle of a sensor node is to periodically wake up a sensor node to monitor channel for sensing activity. Depending on events from the sensor or co-ordinator, transmission with the network can be controlled. This is disadvantageous at it requires the sensor nodes to wake up regardless of whether there is anything to sense, thereby potentially wasting power.

In a still further technique, neighbouring sensor nodes can co-ordinate their duty cycles.

All of the above techniques require sensing and acknowledgement of the wireless channel to achieve communication, which in turn consumes a significant amount of energy. Therefore, sensor nodes using the above techniques will be limited to battery lifetimes of the order of 1 to 2 months. In particular, in medium to large networks, the sensor nodes may spend significantly more energy for sensing and sleep cycle management when compared to communication updates with the network.

It is therefore desirable to provide a communications method in which the power consumption of power limited nodes in decreased, thereby increasing battery life.

### SUMMARY OF THE INVENTION

According to a first aspect of the invention, there is provided a communication method for a communications network comprising an access network node and a power limited node, the method comprising: transmitting a wake-up signal from the access network node; receiving the wake-up signal at the power limited node; generating an activation signal based on the received wake-up signal; and changing the operational mode of the power limited node in response to the activation signal from a sleep mode in which the power limited node is not operable to communicate with the access network node to an active mode in which the power limited node is operable to communicate with the access network node.

The access network may node transmit a wake-up signal in response to a trigger event. The access network node may transmit wake-up signals periodically.

The wake-up signal may be encoded such that the operational mode of the power limited node is only changed if the received encoded wake-up signal is indicative that such a change in mode should occur at the power limited node.

The length of time the power limited node is in the active mode and the synchronisation between the power limited node and the wake-up signal may be controlled by a clock provided in the power limited node.

The wireless communication network may be a wireless sensor network and the access network node may transmit a wake-up signal to at least one sensor node of a plurality of sensor nodes of the wireless sensor network.

According to a second aspect of the invention, there is provided a communications system, comprising: an access network node operable to transmit a wake-up signal; and a power limited node operable to receive the wake-up signal and generate an activation signal, wherein in response to the activation signal, the power limited node is operable to change its operational mode from a sleep mode in which the power limited node is not operable to communicate with the access network node to an active mode in which the power limited node is operable to communicate with the access network node.

The communication network may be a wireless sensor network, the access network node may be a wireless sensor network gateway comprising an RFID reader (transmitting device) operable to transmit an RF wake-up signal, and the power limited node is a sensor node comprising an RFID tag operable to receive the RF wake-up signal.

The RFID tag may be operable to generate a voltage from the received RF wake-up signal as the activation signal.

The sensor node may further comprise a sensor operable to sense one or more parameters, wherein the sensor node may be operable to change its operational mode from a sleep mode to an active mode if one or more parameters sensed by the sensor is above a threshold value.

According to a third aspect of the invention, there is provided an access network node for use in a communications network comprising a power limited node, the access network node comprising: a control unit operable to determine that the power limited node is to change operational mode from a sleep mode in which the power limited node is not operable to communicate with the access network node to an active mode in which the power limited nodes is operable to communicate with the access network node, and to generate a wake-up signal; and a transmitter operable to transmit the wake-up signal to the power limited node.

According to a fourth aspect of the invention, there is provided a power limited node for use in a communications network comprising an access network node, the power limited node comprising: a receiver operable to receive a wake-up signal from the access network node and generate an activation signal, wherein in response to the activation signal, the power limited node is operable to change its operational mode from a sleep mode in which the power limited node is not operable to communicate with the access network node to an active mode in which the power limited node is operable to communicate with the access network node.

According to a fifth aspect of the invention, there is provided a computer program product operable when executed on a computer to perform the method of the above first aspect.

Further particular and preferred aspects of the invention are set out in the accompanying independent and dependent claims.

### BRIEF DESCRIPTION OF THE DRAWINGS

Some embodiments of the apparatus and/or methods in accordance with embodiment of the present invention are now described, by way of example only, with reference to the accompanying drawings, in which:
Figure 1 schematically shows a sensor node and an access network node according to an embodiment;
Figure 2 schematically shows a sensor node of an embodiment; and
Figure 3 shows the sleep control operation of a sensor node in an embodiment.

### DESCRIPTION OF EMBODIMENTS

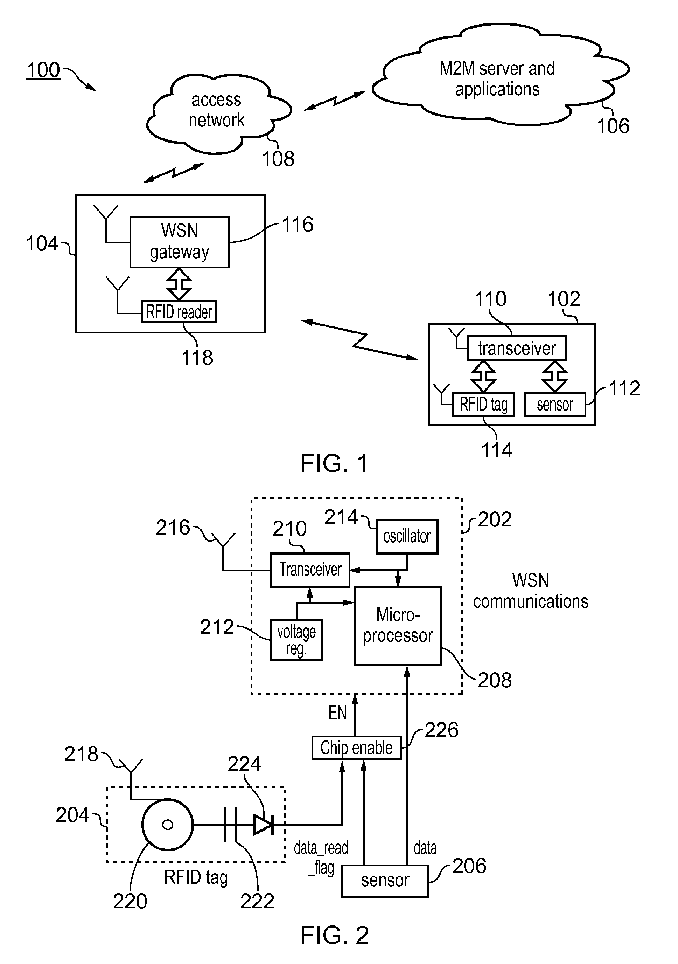

Figure 1 shows a communications network 100 comprising a wireless sensor node 102 in communication with an access network node 104. The access network node 104 communicates with a machine to machine server 106 via an access network 108. The access network and machine to machine server may communicate via Bluetooth, Zigbee or any other suitable personal area network or machine to machine network communication standards.

The wireless sensor node 102 comprises a low power transceiver 110 for data communications with the access network node 104. The wireless sensor node 102 also comprises a sensor 112, which may be any sensor, such as, but not limited to a temperature sensor, gas sensor, movement sensor, traffic sensor or energy meter. The wireless sensor node 102 also comprises an RFID tag 114. The RFID tag 114 is a powerless receiver that can detect/receive control signals from the access network node 104 and can trigger the transceiver 112 to change from a sleep mode to an active mode in response to the detected/received control signal. Although not shown in Figure 1, it should be understood that the transceiver 100 may be implemented as part of a control unit or CPU or indeed a control unit or CPU may be provided as a separate unit to the transceiver 110.

The access network node 104 comprises a wireless sensor network (WSN) gateway 116 in communication with the access network 108, and an RFID reader 118. The RFID reader 118 is operable to transmit a control signal to the wireless sensor node 102 that can be detected/received by the RFID tag 114. It should be appreciated that any suitable transmitter can be used instead of the RFID reader.

In Figure 1, the mains-powered WSN gateway 116 of the access network node 104 generates a control signal or beacon signal to wake up the sensor node 102. The powerless RFID tag 114 detects the control signal and in response to the control signal, the sensor node transitions from a sleep mode in which in which sensor node 102 is not operable to communicate with the access network node 104 to an active mode in which the sensor node is operable to communicate with the access network.

Although Figure 1 shows an RFID receiver and tag, it should be appreciated that any suitable transmitter and receiver could be used, such that the access network node can transmit a control signal and the sensor node can receive the control signal.

By providing an RFID reader 118 in the access network node 104 that can transmit a control signal to wake up the sensor node, energy saving can be achieved as the sensor node will only wake up when requested to do so by the access network node and the network. This will prevent the sensor node from unnecessarily waking up of its own accord as in the known techniques. By providing the sleep management functions in the mains-powered WSN gateway of the access network node, the battery lifetime of the remote wireless sensor node can be greatly extended.

Although not shown in Figure 1, it should be appreciated that a plurality of sensor nodes may be provided in communication with the access network node. The access network node may comprise a single RFID reader for control signal transmission (downlink only) and a WSN gateway transceiver for data communications with the access network as well as the plurality of wireless sensor nodes. Each sensor node of the plurality of sensor nodes may comprise an RFID tag (a RFID detector) that is operable to receive/detect the control signal from the access network node and a transceiver for data communications with the access network node. There may be multiple transceivers/channels in all sensor nodes and the WSN gateway such that control signals may be sent to specific ones of the plurality of sensor nodes.

Figure 2 shows a sensor node 200 according to an embodiment. The sensor node 200 may be implemented in the communications network 100 of Figure 1. The sensor node 200 comprises a control unit 202 in communication with and RFID tag 204 and a sensor 206.

The control unit 202 comprises a micro-processor 208, a transceiver 210, a voltage regulator 212, an oscillator 214 and an antenna 216. The transceiver 210 may be a Texas Instruments (RTM) CC2420 transceiver or any other suitable transceiver. The micro-processor is operable responsive to signals from the voltage regulator 212, the oscillator 214, the sensor 206 and the RFID tag 204 to control the transceiver 210 to communicate with an access network node, such as that shown in Figure 1, via antenna 216.

RFID tag 204 comprises an antenna 218, an induction coil 220, a capacitor 222 and a diode 224 at the output of the RFID tag. Although not shown in Figure 2, an optional amplifier may also be implemented in the RFID tag 204.

RFID tags are widely used in place of bar-codes to identify a particular tag. This is performed using a simple circuitry with a passive antenna, impedance coil and an amplifier as shown in Figure 2. The principle of operation of an RFID tag involves reflection of a received signal at a specific frequency using the mismatch in impedance between antenna and the impedance components of the RFID tag.

In Figure 2, the antenna 218 will detect an RF control signal transmitted from an access network node. Signals from the antenna 218, modulated by the capacitor-diode circuitry, may enable or wake-up the communications transceiver 210 and voltage regulator 212 whenever the signals correspond to a specific frequency or has a signature matched to impedance coil.

In some embodiments, whenever the signals from the antenna 218 correspond to a specific frequency or has a signature matched to impedance coil, the RFID tag 204 may send a data_read flag signal to the a chip enable unit 226 which in turn transmits an enable signal to the control unit 202 to enable the transceiver 210, voltage regulator 212 and oscillator 214.

As can be seen in Figure 2, the sensor 206 may also send an enable signal to the chip enable unit 226 which in turn transmits an enable signal to the control unit 202 to enable the transceiver 210, voltage regulator 212 and oscillator 214. This enables the sensor to wake up the sensor node should it detect/measure a particular parameter that requires notification to the access network.

Table 1 shows the power consumption in the various operational modes of a CC2420 sensor node communications chip.

**Table 1**

| **Operation** | **Volt. Reg & Osc** | **Transceiver** | **Power** |
|---|---|---|---|
| Sleep | Off | Off | 30 µW |
| Idle | On | Off | 3 mW |
| Receive | On | On | 55 mW |
| Transmit (0dB) | On | On | 49 mW |

As can be seen in Table 1, in a sleep mode of operation in which the transceiver 210, the voltage regulator 212 and the oscillator 214 are powered off, the CC2420 communications chip consumes only 30 µW of power. This is compared to 3 mW in an idle mode in which the transceiver 210 is powered off, but the voltage regulator 212 and the oscillator 214 are powered on, 55 mW in a receive mode in which the transceiver 210, the voltage regulator 212 and the oscillator 214 are powered on and 49 mW in a transmit mode in which the transceiver 210, the voltage regulator 212 and the oscillator 214 are powered on. It is therefore clear that in order to maximise battery life of the sensor node, the sensor node should remain in the sleep mode for as much of the time as possible.

Therefore, in a default state, the wireless sensor node 200 is maintained in a sleep mode of operation with the voltage regulator 212, clock oscillator 214 and RF transceiver 210 in an off state in order to save as much power as possible. In the embodiment of Figure 2, the transceiver 210, the voltage regulator 212 and the oscillator 214 are powered off until a control signal is received by the RFID tag 204 from an access network node to wake up the sensor node, at which time the transceiver 210, the voltage regulator 212 and the oscillator 214 will transition to a powered on state for communication with the access network node.

A first scenario and/or application in which powerless RFID and sleep management of the above-described embodiments may be advantageous, is in a simple periodic sensor, for example a smart meter. In the scenario, a sensor node will remain in a sleep mode, while the RFID tag will listen for an RFID control signal (beacon) and will wake-up to sense and transmit to access network node in response to the beacon and will then return to the sleep mode. In this scenario, the sensor operates between active and sleep modes.

A second scenario and/or application in which powerless RFID and sleep management of the above-described embodiments may be advantageous is in a disaster management/healthcare or smart-city application in which a sensor node always stays in a sleep mode and listens for possible triggers events to wake up. This scenario may be referred to as a random burst with trigger scenario.

An example of a first trigger event that may initiate wake up of the sensor node is receiving/detecting an RFID control signal from the access network node indicating that changes in state from the sleep mode to the active receive and transmit mode is required. An example of a second trigger event that may initiate wake up of the sensor node is that a data sensor may indicate that data is to be sent to the access network.

In this second scenario, the sensor node operates between active and sleep modes in order to avoid the idle sensor mode state and saves power. It is important to note that the trigger event operation can be periodic, in that trigger events are received by the sensor node periodically or the trigger event may be received by the sensor node randomly.

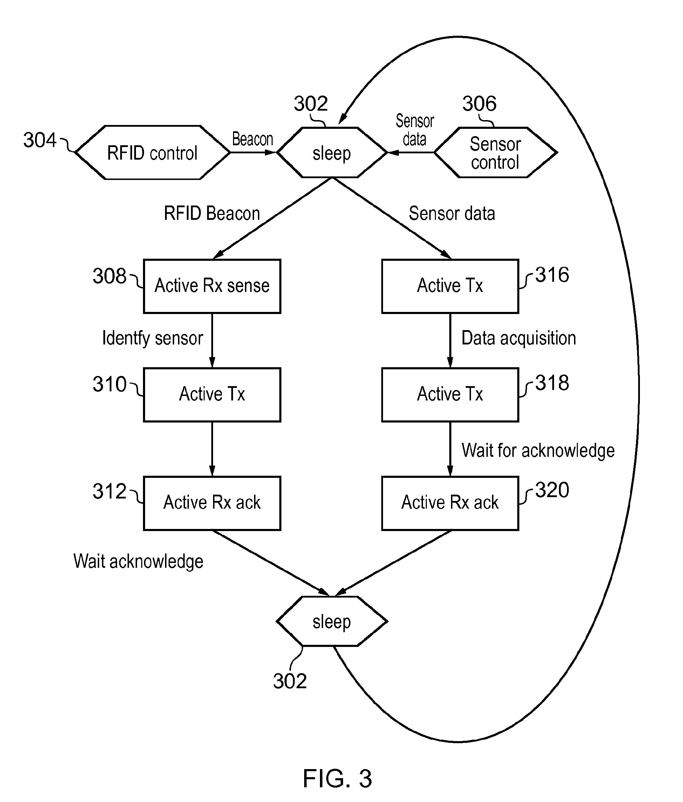

Figure 3 shows the the sleep control operation of a sensor node in this second scenario. As can be seen in Figure 3, the sensor node is in a sleep mode 302 until it receives a beacon (control signal) from an access network node (RFID control) 304 or sensor data from a sensor (sensor control) 306.

On receiving the RFID beacon signal, the sensor node transitions from the sleep mode 302 to an active receive mode 308 in which the sensor is identified, then to an active transmission mode 310 in which data from the sensor is transmitted to the access network, then to an active receive acknowledgement mode 312 in which an acknowledgement of receipt of the sensor data is received from the access network, before returning to the sleep mode 302.

On receiving the sensor data from the sensor control 306 the sensor node transitions from the sleep mode 302 to an active transmission mode 316 in which the sensor data is acquired, then to an active transmission mode 318 in which sensor data is transmitted to the access network, then to an active receive acknowledgement mode 320 in which an acknowledgement of receipt of the sensor data is received from the access network, before returning to the sleep mode 302.

A third scenario and/or application in which powerless RFID and sleep management of the above-described embodiments may be advantageous is in sensing in dense machine to machine networks.

Enhancements of the powerless RFID setup described above in this scenario may include, but are not limited to time encoded sensing, which may be achieved in the coil of the RFID tag to distinguish sensor nodes; RFID signaling techniques to distinguish between different sensor nodes, such as using a chirp sequence; providing the powerless RFID reader/tag with an internal clock for better synchronization to further enhance sensing and synchronization approaches; and encoding techniques to ensure that a particular sensor node is only woken up if the encoding in the beacon signal indicates that the specific sensor node should be awoken. The encoding techniques may be achieved by design of the suitable selection of the coil length and coil impedance in the RFID tags.

The above embodiments describe different scenarios and applications where a passive RFID or similar wake-up radios can be used with a sensor node (power limited node) to increase the battery lifetime of a sensor node by only switching the sensor node from a sleep mode to an active mode on receipt of a control signal, in order to minimize overall energy consumption. Another consideration regarding controlling the sensor node to change from sleep mode to an active transmit receive node is the time that it takes for the sensor node to perform such a transition, sometimes referred to as the latency. Table 2 shows the latency of the transitions between the various operational modes of Table 1.

**Table 2: Transition between different operations in the CC2420 communications chip.**

| Transition | Latency Time (µSec) |
|---|---|
| Sleep to idle | 970 |
| Idle to transmit | 200 |
| Transmit to receive | 220 |

As can be seen in Table 2, although it is desirable to maintain the sensor node in the sleep mode for as long as possible in order to maximise battery life, as the transition from sleep mode to idle mode takes 970 µs, in certain traffic scenarios this latency may be too long a period of time. It may therefore be desirable in some circumstances to maintain the sensor node in an idle mode, as the transition time from idle mode to a transmit mode is only 200 µs. Control of the sensor node in various traffic conditions to ensure energy consumption is reduced, but that system performance is not compromised, may be achieved by appropriate control from the access network node.

Although the above describe the embodiments in relation to sensor nodes, it should be appreciated that the sensor nodes may be any power limited nodes and need not be sensor nodes.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

## Claims

1. A communication method for a communications network comprising an access network node and a power limited node, the method comprising:
transmitting a wake-up signal from the access network node;
receiving the wake-up signal at the power limited node;
generating an activation signal based on the received wake-up signal; and
changing the operational mode of the power limited node in response to the activation signal from a sleep mode in which the power limited node is not operable to communicate with the access network node to an active mode in which the power limited node is operable to communicate with the access network node.

2. A method according to claim 1, wherein the access network node transmits a wake-up signal in response to a trigger event.

3. A method according to claim 1, wherein the access network node transmits wake-up signals periodically.

4. A method according to any preceding claim, wherein the wake-up signal is encoded such that the operational mode of the power limited node is only changed if the received encoded wake-up signal is indicative that such a change in mode should occur at the power limited node.

5. A method according to any preceding claim, wherein the length of time the power limited node is in the active mode and the synchronisation between the power limited node and the wake-up signal is controlled by a clock provided in the power limited node.

6. A method according to any preceding claim, wherein the wireless communication network is a wireless sensor network and the access network node transmits a wake-up signal to at least one sensor node of a plurality of sensor nodes of the wireless sensor network.

7. A communications system, comprising:
an access network node operable to transmit a wake-up signal; and
a power limited node operable to receive the wake-up signal and generate an activation signal, wherein in response to the activation signal, the power limited node is operable to change its operational mode from a sleep mode in which the power limited node is not operable to communicate with the access network node to an active mode in which the power limited node is operable to communicate with the access network node.

8. A system according to claim 7, wherein the communication network is a wireless sensor network, the access network node is a wireless sensor network gateway comprising an RFID reader operable to transmit an RF wake-up signal, and the power limited node is a sensor node comprising an RFID tag operable to receive the RF wake-up signal.

9. A system according to claim 8, wherein the RFID tag is operable to generate a voltage from the received RF wake-up signal as the activation signal.

10. A system according to claim 8 or 10, wherein the sensor node further comprises a sensor operable to sense one or more parameters, wherein the sensor node is operable to change its operational mode from a sleep mode to an active mode if one or more parameters sensed by the sensor is above a threshold value.

11. An access network node for use in a communications network comprising a power limited node, the access network node comprising:
a control unit operable to determine that the power limited node is to change operational mode from a sleep mode in which the power limited node is not operable to communicate with the access network node to an active mode in which the power limited nodes is operable to communicate with the access network node, and to generate a wake-up signal; and
a transmitter operable to transmit the wake-up signal to the power limited node.

12. A power limited node for use in a communications network comprising an access network node, the power limited node comprising:
a receiver operable to receive a wake-up signal from the access network node and generate an activation signal, wherein in response to the activation signal, the power limited node is operable to change its operational mode from a sleep mode in which the power limited node is not operable to communicate with the access network node to an active mode in which the power limited node is operable to communicate with the access network node.

13. A computer program product operable when executed on a computer to perform the method of any of claims 1 to 6.

## Amended claims

### Amended claims in accordance with Rule 137(2) EPC.

**1.** A communication method for a communications network (100) comprising an access network node (104) and one or more power limited nodes (102), the access network node (104) having a first transceiver (116) enabling communication therewith by the or each power limited node (102) via a respective second transceiver (110) thereof, the method comprising:
transmitting a wake-up signal from the access network node (104) using a control transmitter (118);
receiving the wake-up signal using a powerless receiver (204) at a power limited node (102);
generating an activation signal at the power limited node (102) based on the received wake-up signal; and
changing the operational mode of the power limited node (102) in response to the activation signal from a sleep mode in which the power limited node (102) is not operable to communicate with the access network node (104) via the second transceiver (110) thereof to an active mode in which the power limited node (102) is operable to communicate with the access network node (104) via the second transceiver (110) thereof.

**2.** A method according to claim 1, wherein the access network node (104) transmits a wake-up signal in response to a trigger event.

**3.** A method according to claim 1, wherein the access network node (104) transmits wake-up signals periodically.

**4.** A method according to any preceding claim, wherein the wake-up signal is encoded such that the operational mode of the power limited node (102) is only changed if the received encoded wake-up signal is indicative that such a change in mode should occur at the power limited node (102).

**5.** A method according to any preceding claim, wherein the length of time the power limited node (102) is in the active mode and the synchronisation between the power limited node (102) and the wake-up signal is controlled by a clock provided in the power limited node (102).

**6.** A method according to any preceding claim, wherein the wireless communication network (100) is a wireless sensor network and the access network node (104) transmits a wake-up signal to at least one sensor node (102) of a plurality of sensor nodes (102) of the wireless sensor network.

**7.** The method according to any preceding claim, wherein the communication network (100) is a wireless sensor network, and the power limited node (102) is a sensor node.

**8.** The method according to any preceding claim, wherein the control transmitter (118) comprises a RFID reader (118) and/or the powerless receiver (204) comprises an RFID tag (114).

**9.** A communications system, comprising:
an access network node (104) and one or more power limited nodes (102), the access network node (104) having a first transceiver (116) enabling communication therewith by the or each power limited node (102) via a respective second transceiver (110) thereof;
wherein the access network node (104) includes a control transmitter (118) is operable to transmit a wake-up signal; and
wherein a power limited node is operable to receive the wake-up signal using a powerless receiver (204) and generate an activation signal, wherein in response to the activation signal, the power limited node is operable to change its operational mode from a sleep mode in which the power limited node is not operable to communicate with the access network node (104) via the second transceiver (110) thereof to an active mode in which the power limited node is operable to communicate with the access network node (104) via the second transceiver (110) thereof.

**10.** A system according to claim 9, wherein the communication network (100) is a wireless sensor network, the access network node (104) is a wireless sensor network gateway (116) comprising an RFID reader (118) operable to transmit an RF wake-up signal, and the power limited node (102) is a sensor node comprising an RFID tag (114) operable to receive the RF wake-up signal.

**11.** A system according to claim 10, wherein the RFID tag (114) is operable to generate a voltage from the received RF wake-up signal as the activation signal.

**12.** A system according to claim 10 or 9, wherein the sensor node (102) further comprises a sensor (112) operable to sense one or more parameters, wherein the sensor node (102) is operable to change its operational mode from a sleep mode to an active mode if one or more parameters sensed by the sensor (112) is above a threshold value.

**13.** An access network node (104) for use in a communications network (100) comprising the access network node (104) and one or more power limited nodes (102), the or each power limited node (102) comprising a powerless receiver (204) for receiving the wake-up signal and a control unit (208) operable to determine that the power limited node (102) is to change operational mode from a sleep mode in which the power limited node (102) is not operable to communicate with the access network node (104) to an active mode in which the power limited node (102) is operable to communicate with the access network node (104), and to generate a wake-up signal, the access network node (104) comprising:
a first transceiver (116) enabling communication therewith by the or each power limited node (102) via a respective second transceiver (110) thereof; and
a control transmitter (118) operable to transmit the wake-up signal to the power limited node (102).

**14.** A power limited node (102) for use in a communications network (100) comprising an access network node(104) and one or more power limited nodes (102), the access network node (104) having a first transceiver (116) enabling communication with the or each power limited node (102), the power limited node (102) comprising:
a second transceiver (110) for communication with the access network node (104);
a powerless receiver (204) operable to receive a wake-up signal from the access network node (104) and generate an activation signal, wherein in response to the activation signal, the power limited node (102) is operable to change its operational mode from a sleep mode in which the power limited node (102) is not operable to communicate with the access network node (104) to an active mode in which the power limited node (102) is operable to communicate with the access network node (104).

**15.** A computer program product operable when executed on a computer to perform the method of any of claims 1 to 8.
